Europäisches Patentamt

European Patent Office

Office européen des brevets

(19)

(11) EP 0 797 291 A2

(12) EUROPÄISCHE PATENTANMELDUNG

(43) Veröffentlichungstag:
24.09.1997 Patentblatt 1997/39

(51) Int. Cl.⁶: H02M 7/48

(21) Anmeldenummer: 97103947.4

(22) Anmeldetag: 10.03.1997

(84) Benannte Vertragsstaaten:
DE FR GB IT

(30) Priorität: 22.03.1996 DE 19611418

(71) Anmelder: SIEMENS AKTIENGESELLSCHAFT
80333 München (DE)

(72) Erfinder:
• Gehring, Jürgen, Dipl.-Ing.
91052 Erlangen (DE)
• Hümpfner, Roland, Dipl.-Ing.
91074 Herzogenaurach (DE)

(54) **Verfahren zur Vorgabe einer vorbestimmten Ausgangsimpedanz eines Ausgangskreises eines Wechselrichters**

(57) Die Erfindung bezieht sich auf ein Verfahren zur Vorgabe einer vorbestimmten Ausgangsimpedanz eines Ausgangskreises (4) eines Wechselrichters (2), wobei der Ausgangskreis (4) einen Sinusfilter (14), einen Transformator (16) und einen Ausgangskondensator (18) aufweist, wobei der Transformator (16) primärseitig in Dreieck und sekundärseitig in Stern geschaltet ist, und auf eine Vorrichtung (6) zur Durchführung dieses Verfahrens. Erfindungsgemäß werden die gemessenen Ausgangsspannungen ($u_{A1}$,$u_{A2}$,$u_{A3}$) des Ausgangskreises (4), die gemessenen Wechsel-richter-Ausgangsströme ($i_{f1}$,$i_{f2}$,$i_{f3}$) und vorgegebene Sollspannungen ($u_{W1}$,$u_{W2}$,$u_{W3}$) in $\alpha$-, $\beta$-Komponenten ($u_{A\alpha}$, $u_{A\beta}$;$i_{f\alpha}$,$i_{f\beta}$;$u_{W\alpha}$,$u_{W\beta}$) transformiert, mit deren Hilfe $\alpha$-, $\beta$-Komponenten ($u_{K\alpha}$,$u_{K\beta}$) einer Korrekturspannung ($u_K$) und anschließend $\alpha$-, $\beta$-Komponenten ($y_\alpha$,$y_\beta$) einer Stellgröße (y) bestimmt werden, die dann in Stellgrößen ($y_1$,$y_2$,$y_3$) für den Wechselrichter (2) rücktransformiert werden. Somit kann man den Impedanzwert des Ausgangskreises (4) auf einen vorbestimmten Wert regeln.

FIG 1

EP 0 797 291 A2

**Beschreibung**

Die Erfindung bezieht sich auf ein Verfahren zur Vorgabe einer vorbestimmten Ausgangsimpedanz eines Ausgangskreises eines Wechselrichters, wobei der Ausgangskreis einen Sinusfilter, einen Transformator und einen Ausgangskondensator aufweist, wobei der Transformator primärseitig in Dreieck und sekundärseitig in Stern geschaltet ist, und auf eine Vorrichtung zur Durchführung dieses Verfahrens.

Eine derartige Anordnung - Wechselrichter mit nachgeschaltetem Ausgangskreis - kommt beispielsweise bei unterbrechungsfreien Stromversorgungen (USV) vor, wobei die Regelstrecke der Ausgangskreis der USV und das Stellglied der Wechselrichter der USV ist. Am Ausgang des Ausgangskreises steht ein dreiphasiges Spannungssystem zur Verfügung, das beispielsweise das Spannungssystem der sicheren Schiene einer USV ist. Dieses Spannungssystem wird vom Wechselrichter, insbesondere einem Pulswechselrichter, erzeugt. Zur Dämpfung der Taktfrequenz des Wechselrichters in den Ausgangssignalen des Wechselrichters ist ein Sinusfilter, bestehend aus auf die Taktfrequenz abgestimmten LC-Schwingkreisen, vorgesehen. Der Transformator ist einerseits zur Entkopplung des ausgangsseitigen dreiphasigen Spannungssystems und des Ausgangssystems des Wechselrichters und andererseits zur Erzeugung von drei Leiterspannungen mit Nullpunktleiter vorgesehen. Außerdem weist der Ausgangskreis des Wechselrichters einen Ausgangskondensator zur Blindstromkompensation auf, wobei dieser Ausgangskondensator pro Phase einen Kondensator aufweist, die in Dreieck geschaltet sind.

Die erste Besonderheit der Regelstrecke ist die Tatsache, daß der Transformator primärseitig in Dreieck und sekundärseitig in Stern geschaltet ist. Dadurch erhält die Strecke zwei Stelleingänge (primärseitige verkettete Spannungen), aber drei Ausgänge (drei sekundärseitige Leiterspannungen). Offensichtlich existiert in den Ausgangsspannungen ein Anteil, der nicht durch die Primärspannungen des Transformators beeinflußbar ist. Dieser nicht steuerbare Anteil ist das Nullsystem, d.h., ein gleichphasiger Anteil in allen drei Ausgangsspannungen. Die Größe dieses Anteils wird im wesentlichen bestimmt durch die elektrischen Eigenschaften (Verluste, Steuerung) des Transformators. Je kleiner die Verluste und die Steuerung sind, desto kleiner ist der Nullanteil in den drei Ausgangsspannungen. Da er durch die Stelleingänge nicht beeinflußt werden kann, muß der Nullanteil beim Reglerentwurf aus den Streckengleichungen entfernt werden.

Eine weitere Eigenschaft der Regelstrecke ergibt sich dadurch, daß der Transformator keine Gleichspannungen übertragen kann. Werden also am Streckeneingang Spannungen angelegt, die Gleichanteile enthalten, so sind diese am Streckenausgang nicht mehr vorhanden. Sie machen sich jedoch auf andere Weise bemerkbar: Der Transformator geht in Sättigung.

Eine vernünftige Regelung der Ausgangsspannung ist dann nicht mehr möglich. Deshalb müssen Gleichspannungen am Streckeneingang vermieden werden.

Der Ausgangskondensator bildet zusammen mit der Streuinduktivität des Transformators einen schwach gedämpften Reihenschwingkreis. Der Ausgangskreis enthält eine Reihe von Resonanzfrequenzen, von denen eine meist im Bereich zwischen 200 Hz und 500 Hz liegt. Die Ausgangsimpedanz dieser Anordnung (beispielsweise einer USV) ist bei der Resonanzfrequenz besonders hoch und bewirkt gerade dort, wo typische USV-Lasten höhere Harmonische im Laststrom entstehen, eine nicht tolerierbare Verzerrung der Ausgangsspannung.

Die Hauptstörgröße ist der Laststrom. Die Bekämpfung seines Einflusses ist schwierig, da er nicht unabhängig entsteht, sondern über die Last aus der Ausgangsspannung gebildet wird.

Je besser versucht wird, die Spannung auf den vorgegebenen Sollwert zu regeln, desto größer wird auch der Strom und damit die Störgröße. Bei nichtlinearen Lasten hat sie einen hohen Anteil an höheren Harmonischen, die immer größer werden, je mehr ihr Einfluß auf die Ausgangsspannung bekämpft wird. Um eine gute Störunterdrückung zu erzielen, ist es wichtig, den Störfrequenzgang der Strecke möglichst klein zu machen, insbesondere in dem Teil des Frequenzbereiches, in dem die meisten Störungen entstehen. Der Störfrequenzgang der Strecke ist die Übertragungsfunktion der Störgröße zur Ausgangsgröße, also hier die Ausgangsimpedanz. Je kleiner die Ausgangsimpedanz ist, desto unabhängiger wird die Ausgangsspannung von der Last und desto kleiner wird ihre Verzerrung (der Klirrfaktor) bei nichtlinearer Last.

Der Erfindung liegt nun die Aufgabe zugrunde, ein Verfahren und eine Vorrichtung anzugeben, mit der eine vorbestimmte Ausgangsimpedanz vorgegeben werden kann.

Diese Aufgabe wird mittels der Verfahrensschritte gemäß Anspruch 1 erfindungsgemäß gelöst.

Wie bereits beschrieben, muß der gleichphasige Anteil in den drei Ausgangsspannungen herausgerechnet werden. Ein Hilfsmittel dazu, das ein Dreiphasensystem in zwei linear unabhängige Größen und das Nullsystem aufteilt, ist eine Transformation, die in der Literatur auch als Clarke-Transformation bezeichnet wird. Sind beispielsweise die drei Phasen des Dreiphasensystems symmetrisch (drei um 120° versetzte Sinusfunktionen), so erhält man durch Anwendung der Transformation zwei um 90° versetzte Sinusfunktionen und als Nullsystem identisch Null. Die zwei neuen Größen werden allgemein als $\alpha$-, $\beta$-Größen bezeichnet.

Falls das Nullsystem gleich Null ist, ist die $\alpha$-Komponente der Ausgangsspannung des Ausgangskreises gleich der Leiterspannung der Phase R gegen den Nullleiter und die $\beta$-Komponente gleich der verketteten Spannung zwischen den Phasen S und T geteilt durch $\sqrt{3}$. Die $\alpha$-Komponente und die $\beta$-Komponente bilden einen komplexen Vektor, der in der Literatur als Parkvektor bezeichnet wird. Bei einem symmetrischen Dreiphasensystem ist sein Betrag konstant und er rotiert mit der Frequenz des Dreiphasensystems um den Nullpunkt der komplexen Ebene.

Durch die Anwendung dieser sogenannten Clarke-Transformation auf die Streckengleichungen hat man folgenden Vorteil: Die $\alpha$-, $\beta$-Komponenten haben identische Einphasen-Ersatzschaltbilder, die untereinander kaum verkoppelt sind. Das heißt, die $\beta$-Komponente der Ausgangsspannung ist identisch Null, falls die Strecke nur mit der $\alpha$-Komponente der Eingangsspannung erregt wird und umgekehrt. Dadurch kann für $\alpha$- und $\beta$-Komponenten jeweils ein identischer Eingrößenregler verwendet werden.

Nachdem man die Führungsgröße Sollspannung, die Regelgröße Ausgangsspannung des Ausgangskreises und den Wechselrichter-Ausgangsstrom transformiert hat, werden mittels zweier identischer Eingrößenregler in Abhängigkeit der Regelgröße Korrekturgrößen für die Führungsgrößen generiert. Zur Beherrschung einiger Betriebsfälle bei einer USV, wie Kurzschluß und Netzparallelbetrieb, wird der Wechselrichter-Ausgangsstrom benötigt. Die ermittelten $\alpha$-, $\beta$-Führungskorrekturgrößen werden komponentenweise der Führungsgröße aufaddiert und anschließend die $\alpha$-, $\beta$-Summenkomponenten wieder in ein dreiphasiges Stellgrößensystem rücktransformiert, mit dem der Wechselrichter angesteuert wird.

Mittels dieses erfindungsgemäßen Verfahrens werden die schwach gedämpften resonanten Streckenpole in Abhängigkeit einer vorbestimmten Impedanz in vorbestimmte komplexe Pole verschoben. Das heißt, der Störfrequenzgang der Strecke wird auf einen vorbestimmten Wert gesetzt, wodurch eine gute Störunterdrückung erzielt wird. Je kleiner die Ausgangsimpedanz ist, desto unabhängiger wird die Ausgangsspannung von der Last und umso kleiner wird ihre Verzerrung (Klirrfaktor) bei nichtlinearer Last. Vorteilhafterweise wird die Ausgangsimpedanz bis zu einer bestimmten Grenzfrequenz auf einen konstanten Wert geregelt.

Bei einem vorteilhaften Verfahren wird eine Führungsregelung zu dem bereits erläuterten Verfahren hinzugefügt. Diese Führungsregelung sorgt dafür, daß die Regelgröße Ausgangsspannung des Ausgangskreises der Führungsgröße Sollspannung nachgeführt wird. Das heißt, auftretende Regelabweichungen in der Ausgangsspannung des Ausgangskreises werden zu Null geregelt.

Da bereits das dreiphasige Sollspannungssystem und das dreiphasige Ausgangsspannungssystem jeweils in einen komplexen Vektor mit den kartesischen Koordinaten $\alpha$- und $\beta$-Komponente transformiert sind, liegt es nahe, als Führungsregler einen komplexen Integrator zu verwenden. Der komplexe Integrator kann jedoch nur für die Gleichgrößen verwendet werden, so daß die sinusförmigen Führungsgrößen in Gleichgrößen transformiert werden müssen. Werden Soll- und Istwerte als rechtsumlaufender Vektor betrachtet, der in Gleichgrößen transformiert wird, so ist der Führungsregler ein einziger komplexer Integrator. Dieser allein hat jedoch unzureichendes Schieflastverhalten, so daß eine zusätzliche Transformation in Gleichgrößen eingeführt wird, bei der Soll- und Istwerte jeweils als linksumlaufende Vektoren aufgefaßt werden. Für den linksumlaufenden Sollwert muß ebenfalls ein Führungsregler vorgesehen werden.

Somit liegt dem vorteilhaften Verfahren die Erkenntnis zugrunde, die Führungsregelung in einem mit der Netzfrequenz umlaufenden Koordinatensystem statt in einem ruhenden Koordinatensystem durchzuführen. Dadurch werden aus Wechselgrößen Gleichgrößen. Da durch eine einphasige Belastung am Ausgangskreis eine Schieflast vorliegt, wird bei der Transformation des umlaufenden komplexen Vektors der Ausgangsspannung und der Sollspannung in einen ruhenden Raumzeiger mit seinen d- und q-Komponenten eines Rechts- und eines Linksdrehfeldes transformiert. Durch diese Transformation erhält man nun für die Führungsregelung für die Führungsgröße und die Regelgröße jeweils vier Gleichgrößen, die jeweils einer Gleichgrößen-Führungsregelung, bestehend aus Vergleicher, I-Regler und Additionsstelle, zugeführt werden. Die vier Ausgangs-Gleichgrößen dieser Gleichgrößen-Führungsregelung werden dann wieder in einen umlaufenden komplexen Vektor rücktransformiert, der bei dem Verfahren gemäß Anspruch 1 verwendet wird.

Mit diesem vorteilhaften Verfahren wird einerseits ein vorbestimmter Ausgangs-Impedanzwert des Ausgangskreises des Wechselrichters eingestellt und andererseits das Führungsverhalten wesentlich verbessert.

Zur näheren Erläuterung der Erfindung wird auf die Zeichnung Bezug genommen, in der ein Ausführungsbeispiel einer Vorrichtung zur Durchführung des erfindungsgemäßen Verfahrens schematisch veranschaulicht ist.

Figur 1     zeigt ein Ersatzschaltbild eines Wechselrichters mit einem Ausgangskreis und einer Vorrichtung zur Durchführung des erfindungsgemäßen Verfahrens, in der

Figur 2     ist ein einphasiges Ersatzschaltbild des Ausgangskreises nach Figur 1 dargestellt, die

Figur 3     zeigt in einem Diagramm den Verlauf der Ausgangsimpedanz des Ausgangskreises ohne und mit dem erfindungsgemäßen Verfahren, wobei in

Figur 4     in einem Diagramm der Führungsfrequenzgang ohne und mit dem erfindungsgemäßen Verfahren dargestellt wird, die

Figur 5     zeigt ein Ersatzschaltbild eine vorteilhafte Vorrichtung zur Durchführung des erfindungsgemäßen Verfahrens, wobei die

Figur 6     eine weitere Transformationseinrichtung und die

Figur 7     eine weitere Rücktransformationseinrichtung der Figur 5 näher darstellen und die

Figur 8      zeigt in der komplexen Ebene die schwach gedämpften Streckenpole und die durch das erfindungsgemäße Verfahren eingestellten Eigenfrequenzen der Strecke.

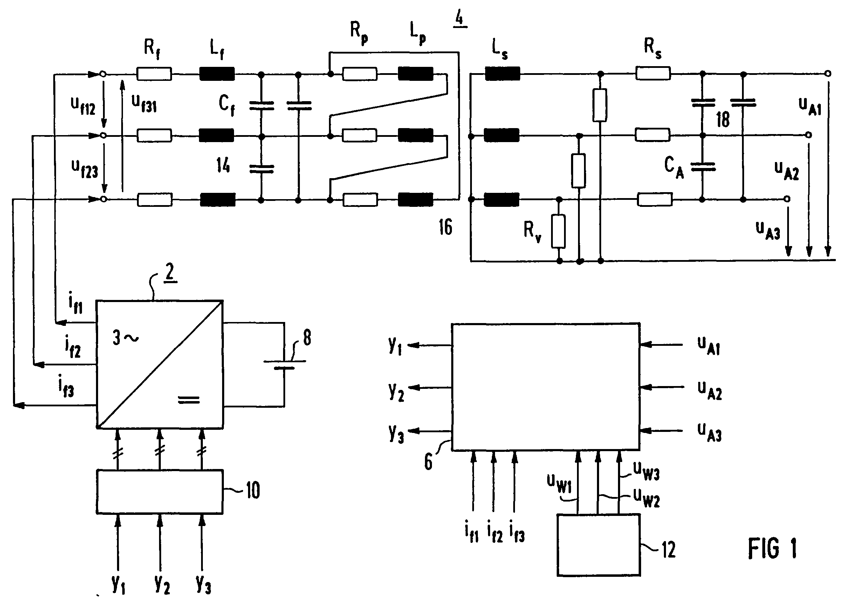

Die Figur 1 zeigt einen Wechselrichter 2, insbesondere einen Pulswechselrichter, mit einem nachgeschalteten Ausgangskreis 4 und einer Vorrichtung 6 zur Durchführung des erfindungsgemäßen Verfahrens. Der Wechselrichter 2 ist gleichspannungsmäßig mit einem Zwischenkreiskondensator oder einer Batterie 8 versehen, wobei zur Erzeugung von Steuersignalen für den Wechselrichter 2 ein Steuersatz 10 vorgesehen ist, an deren Stelleingängen jeweils eine Stellgröße $y_1, y_2, y_3$ eines dreiphasigen Stellgrößensystems anstehen. Diese Stellgrößen $y_1$, $y_2, y_3$ werden von der Vorrichtung 6 erzeugt. Zur Generierung der Stellgrößen $y_1, y_2, y_3$ werden bei der Verwendung des erfindungsgemäßen Verfahrens folgende Größen benötigt: Die Ausgangsspannungen $u_{A1}, u_{A2}, u_{A3}$ des Ausgangskreises 4, die Wechselrichter-Ausgangsströme $i_{f1}, i_{f2}, i_{f3}$ und die Führungsgrößen $u_{W1}$, $u_{W2}, u_{W3}$, die von einem dreiphasigen Sollwertgeber 12 bereitgestellt werden. Wird das erfindungsgemäße Verfahren nicht benutzt, so werden die Führungsgrößen $u_{W1}, u_{W2}, u_{W3}$ als Stellgrößen $y_1, y_2, y_3$ ausgegeben.

Bei einer unterbrechungsfreien Stromversorgungseinrichtung, auch als USV bezeichnet, ist als Führungsgrößensystem ein dreiphasiges 50 Hz-Spannungssystem vorgesehen. Die Regelstrecke ist dann der Ausgangskreis der USV. Der Ausgangskreis 4 ist ein elektrisches Dreiphasensystem, das einen Sinusfilter 14, einen Dreischenkeltransformator 16 und einen Ausgangskondensator 18 enthält. Das Stellglied ist der Wechselrichter 2 der USV. Er wird vereinfachend als Verstärker modelliert, der bei geeigneter Normierung der Streckenkonstanten die Verstärkung Eins erhält.

Die erste Besonderheit der Regelstrecke ist die Tatsache, daß der Transformator 16 primärseitig in Dreieck und sekundärseitig in Stern geschaltet ist. Dadurch erhält die Strecke zwei Stelleingänge, nämlich zwei primärseitig verkettete Spannungen, beispielsweise $u_{f12}$ und $u_{f23}$, wobei die dritte verkettete Spannung $u_{f31}$ linear von den anderen abhängig ist, aber drei Ausgänge, nämlich die sekundärseitigen Leiterspannungen $u_{A1}$, $u_{A2}, u_{A3}$, die voneinander linear unabhängig sind. Offensichtlich existiert in den Ausgangsspannungen $u_{A1}, u_{A2}, u_{A3}$ ein Anteil, der nicht durch die Primärspannungen des Transformators 16 beeinflußbar ist. Dieser nicht steuerbare Anteil ist das sogenannte Nullsystem, d.h. ein dreiphasiger Anteil in allen drei Ausgangsspannungen $u_{A1}$, $u_{A2}$ und $u_{A3}$. Die Größe dieses Anteils wird im wesentlichen bestimmt durch die elektrischen Eigenschaften (Verluste, Streuung) des Transformators 16. Je kleiner die Verluste und die Streuung sind, desto kleiner ist der Nullanteil in den drei Ausgangsspannungen $u_{A1}, u_{A2}, u_{A3}$. Da dieser Nullanteil durch die Stelleingänge nicht beeinflußt werden kann, muß er bei einem Reglerentwurf aus den Streckengleichungen herausgerechnet werden.

Eine weitere Eigenschaft der Regelstrecke ergibt sich dadurch, daß der Transformator 16 keine Gleichspannungen übertragen kann. Werden also am Strek-keneingang Spannungen angelegt, die Gleichanteile enthalten, so sind diese am Streckenausgang nicht mehr vorhanden. Sie machen sich jedoch auf andere Weise bemerkbar: Der Transformator 16 geht in Sättigung.

Der Ausgangskondensator 18, der drei Kondensatoren $C_A$ aufweist, die in Dreieck geschaltet sind, bildet zusammen mit der Streuinduktivität des Transformators 16 einen schwach gedämpften Reihenschwingkreis. Die Resonanzfrequenz liegt etwa bei 200 Hz bis 500 Hz. Durch diese Resonanz wird die Ausgangsspannung bei nichtlinearer Last stark verzerrt.

Wie bereits erwähnt, muß der gleichphasige Anteil in den drei Ausgangsspannungen $u_{A1}, u_{A2}, u_{A3}$ herausgerechnet werden. Ein Hilfsmittel dazu, das ein Dreiphasensystem in zwei linear unabhängige Größen und das Nullsystem aufteilt, ist eine Drei-Zwei-Transformation, in der Literatur auch bekannt unter der Bezeichnung Clarke-Transformation. Sind beispielsweise die drei Phasen symmetrisch (drei um 120° versetzte Sinusfunktionen), so erhält man durch Anwendung dieser bekannten Clarke-Transformation zwei um 90° versetzte Sinusschwingungen und als Nullsystem identisch Null. Die zwei neuen Größen werden dann als $\alpha$-, $\beta$-Größen bezeichnet. Falls das Nullsystem gleich Null ist, ist die $\alpha$-Komponente der Ausgangsspannung gleich der Leiterspannung $u_{A1}$ gegen den Nulleiter und die $\beta$-Komponente gleich der verkehrten Spannung zwischen $u_{A2}$ und $u_{A3}$ geteilt durch $\sqrt{3}$. Diese beiden Kom-ponenten bilden in der komplexen Ebene einen komplexen Vektor, der in der Literatur als Parkvektor bezeichnet wird. Bei einem symmetrischen Dreiphasensystem ist sein Betrag konstant und er rotiert mit der Frequenz des Dreiphasensystems um den Nullpunkt der komplexen Ebene.

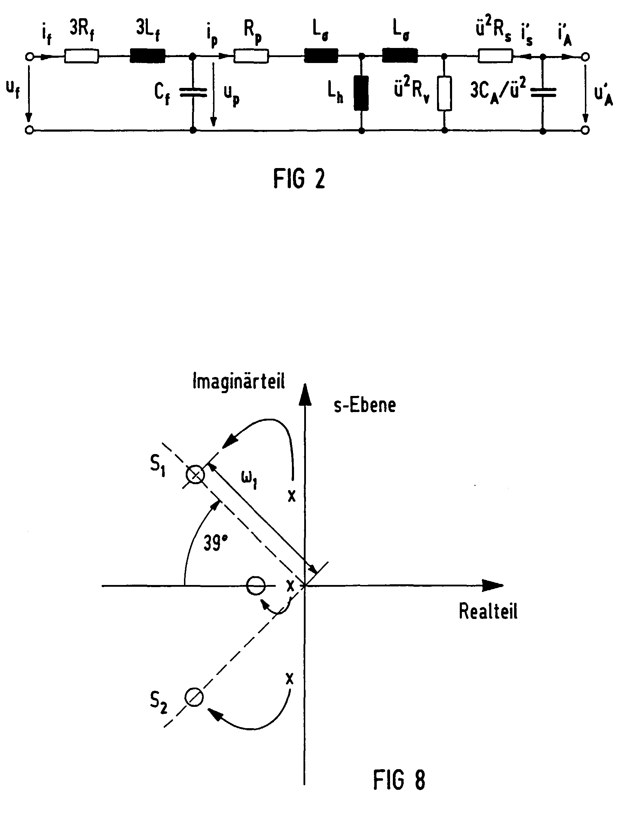

Die Anwendung der Transformation auf die Strek-kengleichung hat einen entscheidenden Vorteil: Die $\alpha$-, $\beta$-Komponenten haben identische einphasige Ersatzschaltbilder, von denen in der Figur 2 eines dargestellt ist. Diese einphasigen Ersatzschaltbilder sind kaum untereinander verkoppelt, d.h., die $\beta$-Komponente der Ausgangsspannung ist identisch Null, falls die Strecke nur mit der $\alpha$-Komponente der Eingangsspannung erregt wird und umgekehrt.

In dem einphasigen Ersatzschaltbild gemäß Figur 2 sind die Eisenverluste vernachlässigt und alle Größen auf die Primärseite umgerechnet. Für die Regelung müssen Stellgrößen und Istwerte in ihre Komponenten umgerechnet werden. Dabei ist beim Umrichterstrom zu beachten, daß er aufgrund der primärseitigen Dreieckswicklung um 30° phasenverschoben ist. Im einzelnen gelten folgende Gleichungen:

Ausgangsspannung $u'_A = \ddot{u} \cdot u_A$

$$u'_{A\alpha} = \frac{2}{3} u_{A1} - \frac{1}{3} u_{A2} - \frac{1}{3} u_{A3} \qquad (1)$$

$$u'_{A\beta} = \frac{1}{\sqrt{3}} u_{A2} - \frac{1}{\sqrt{3}} u_{A3} \qquad (2)$$

Ausgangsstrom $i'_A = i_A/\ddot{u}$

$$i'_{A\alpha} = \frac{2}{3} i_{A1} - \frac{1}{3} i_{A2} - \frac{1}{3} i_{A3} \qquad (3)$$

$$i'_{A\beta} = \frac{1}{\sqrt{3}} i_{A2} - \frac{1}{\sqrt{3}} i_{A3} \qquad (4)$$

Umrichterstrom $i_f$

$$i_{f\alpha} = \frac{1}{3} i_{f1} - \frac{1}{3} i_{f2} \qquad (5)$$

$$i_{f\beta} = \frac{1}{3\sqrt{3}} i_{f1} + \frac{1}{3\sqrt{3}} i_{f2} - \frac{2}{3\sqrt{3}} i_{f3} \qquad (6)$$

Umrichterspannung $u_f$ (=Stellgröße)

$$u_{f\alpha} = \frac{2}{3} u_{f1} - \frac{1}{3} u_{f2} - \frac{1}{3} u_{e3} \qquad (7)$$

$$u_{f\beta} = \frac{1}{\sqrt{3}} u_{f2} - \frac{1}{\sqrt{3}} u_{f3} \qquad (8)$$

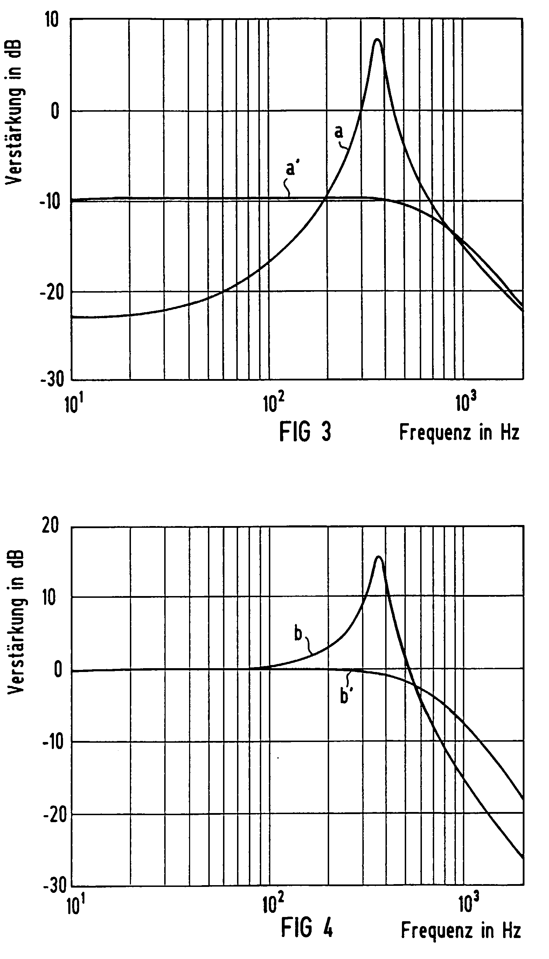

Im gesteuerten Betrieb des Wechselrichters 2 mit nachgeschaltetem Ausgangskreis 4 erhält man den mit a gekennzeichneten Verlauf der Ausgangsimpedanz, d.h. die Übertragungsfunktion vom Laststrom zur Ausgangsspannung (Figur 3). In Figur 4 zeigt der mit b gekennzeichnete Verlauf den Führungsfrequenzgang, d.h. die Übertragungsfunktion vom gewünschten Ausgangsspannungsverlauf zum tatsächlichen Verlauf, des Wechselrichters 2 mit nachgeschaltetem Ausgangskreis 4. In diesen genannten Figuren 3 und 4 ist jeweils der Verlauf der Ausgangsimpedanz, gekennzeichnet mit a', und der Führungsfrequenzgang, gekennzeichnet mit b', des dargestellten Wechselrichters 2 mit dem erfindungsgemäßen Verfahren.

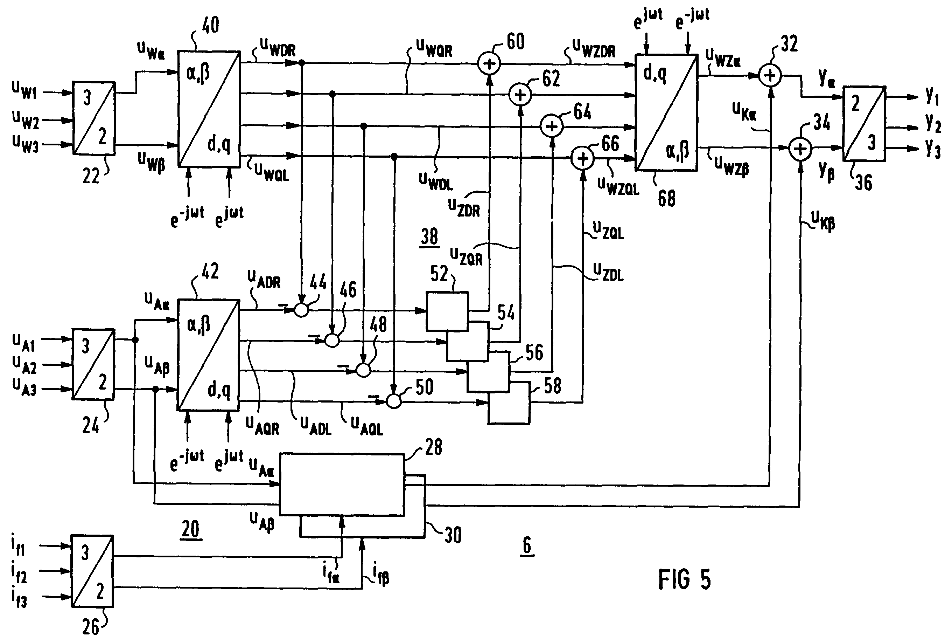

Die Figur 5 zeigt ein Ersatzschaltbild der Vorrichtung 6 zur Durchführung des erfindungsgemäßen Verfahrens. Bei diesem Ersatzschaltbild handelt es sich um eine vorteilhafte Ausführungsform der Vorrichtung 6. Diese vorteilhafte Ausführungsform der Vorrichtung 6 weist einen Teil 20, bestehend aus den Transformationseinrichtungen 22, 24 und 26, den beiden Eingrößenreglern 28 und 30, den beiden Additionsstellen 32 und 34 und einer Rücktransformationseinrichtung 36, und einen weiteren Teil 38, bestehend aus den weiteren Transformationseinrichtungen 40 und 42, den Vergleichern 44, 46, 48 und 50, den Reglern 52, 54, 56 und 58, den weiteren Additionsstellen 60, 62, 64, 66 und einer weiteren Rücktransformationseinrichtung 68, auf. Der Teil 20 kann auch ohne den weiteren Teil 38 betrieben werden. Mittels des Teils 20 dieser Vorrichtung 6 kann eine vorbestimmte Ausgangsimpedanz des Ausgangskreises 4 eingestellt werden. Mit dem weiteren Teil 38 dieser Vorrichtung 6 wird das Führungsverhalten wesentlich verbessert.

Mit der Transformationseinrichtung 22 bzw. 24 bzw. 26 wird die Führungsgrößen $u_{W1}, u_{W2}, u_{W3}$ bzw. die Ausgangsspannungen $u_{A1}, u_{A2}, u_{A3}$ bzw. die Wechselrichter-Ausgangsströme $i_{f1}, i_{f2}, i_{f3}$ in zwei 90° versetzte $\alpha$-, $\beta$-Komponenten transformiert. Die $\alpha$- und $\beta$-Komponenten der Ausgangsspannung und die $\alpha$- und $\beta$-Komponenten des Wechselrichter-Ausgangsstromes werden komponentenweise jeweils einem Eingrößenregler 28 und 30 zugeführt. Diese Eingrößenregler 28 und 30, insbesondere Zustandsregler, erzeugen in Abhängigkeit der $\alpha$- bzw. $\beta$-Komponente der transformierten Ausgangsspannung $u_{A\alpha}, u_{A\beta}$ unter Zuhilfenahme des transformierten Wechselrichter-Ausgangsstromes $i_{f\alpha}, i_{f\beta}$ eine $\alpha$- und $\beta$-Komponente einer Korrekturspannung $u_{K\alpha}, u_{K\beta}$, die mittels der Additionsstellen 32 und 34 komponentenweise zur transformierten Führungsgröße $y_\alpha, y_\beta$ addiert werden. Wenn der weitere Teil 38 der Vorrichtung 6 nicht vorhanden ist, so ist die $\alpha$-Komponente $u_{W\alpha}$ der Führungsgröße $u_W$ mit der Additionsstelle 32 direkt verbunden und die $\beta$-Komponente $u_{W\beta}$ direkt mit der Additionsstelle 34. Am Ausgang der Additionsstelle 32 bzw. 34 steht eine $\alpha$-Komponente $y_\alpha$ bzw. eine $\beta$-Komponente $y_\beta$ einer Stellgröße y an, die mit Hilfe der Rücktransformationseinrichtung 36 in ein dreiphasiges Stellgrößensystem mit den Stellgrößen $y_1, y_2, y_3$ transformiert werden.

Die identischen Eingrößenregler 28 und 30 sind so konzipiert, daß mittels der Korrekturspannung $u_{K\alpha}, u_{K\beta}$ die transformierte Führungsgröße $u_{W\alpha}, u_{W\beta}$ derart verändert wird, daß die schwach gedämpften resonanten Streckenpole an eine geeignete Stelle S1 und S2 der komplexen Ebene (Figur 8) verschoben werden. Diese geeigneten Stellen S1 und S2 werden in Abhängigkeit einer gewünschten Ausgangsimpedanz des Ausgangskreises 4 des Wechselrichters 2 bestimmt. Der erzielte Verlauf der Ausgangsimpedanz a' über die Frequenz ist in Figur 3 dargestellt. Ein Vergleich mit dem Verlauf der Ausgangsimpedanz a des gesteuerten Betriebs zeigt, daß die Resonanzüberhöhung nicht mehr vorhanden ist. Diese Resonanzüberhöhung ist für die Spannungsverzerrung verantwortlich. Mit dem erfindungsgemäßen Verfahren erhält man bis zur Grenzfrequenz einen konstanten Verlauf der Ausgangsimpedanz.

Um das Führungsverhalten ebenfalls wesentlich zu verbessern, ist der weitere Teil 38 der Vorrichtung 6 vorgesehen. Mittels diesem weiteren Teil werden der rotierende Vektor $u_{W\alpha}, u_{W\beta}$ der Führungsgröße $u_W$ und der rotierende Vektor $u_{A\alpha}, u_{A\beta}$ der Ausgangsgröße $u_A$ in der komplexen Ebene in einen Raumzeiger $u_{WDR}$, $u_{WDL}, u_{WQR}, u_{WQL}$ der Führungsgröße $u_W$ und einem Raumzeiger $u_{ADR}, u_{ADL}, u_{AQR}, u_{AQL}$ der Ausgangsspannung $u_A$ in ein mit der Netzfrequenz umlaufendes Koordinatensystem D,Q transformiert. Zu dieser Transformation sind weitere Transformationseinrichtungen 40 und 42 vorgesehen. Durch die Transformation werden aus Wechselgrößen Gleichgrößen. Da die Größen des Führungsreglers als Wechselgrößen in kartesischen Koordinaten vorgegeben werden, könnte man ohne diese Transformation als Führungsregler keinen komplexen Integrator verwenden. Ein komplexer Integrator entspricht zwei Integratoren für Real- und Imaginärteil. Ein einziger derartiger komplexer Integrator hat jedoch ein unzureichendes Schieflastverhalten. Bei einphasiger Belastung würde in der Ausgangsspannung $u_A$ des Ausgangskreises 4 zur Komponente des Drehfeldes ebenso eine Komponente des Linksdrehfeldes entstehen. Um die Komponente des Linksdrehfeldes ausregeln zu können, benötigt man eigenen Regler.

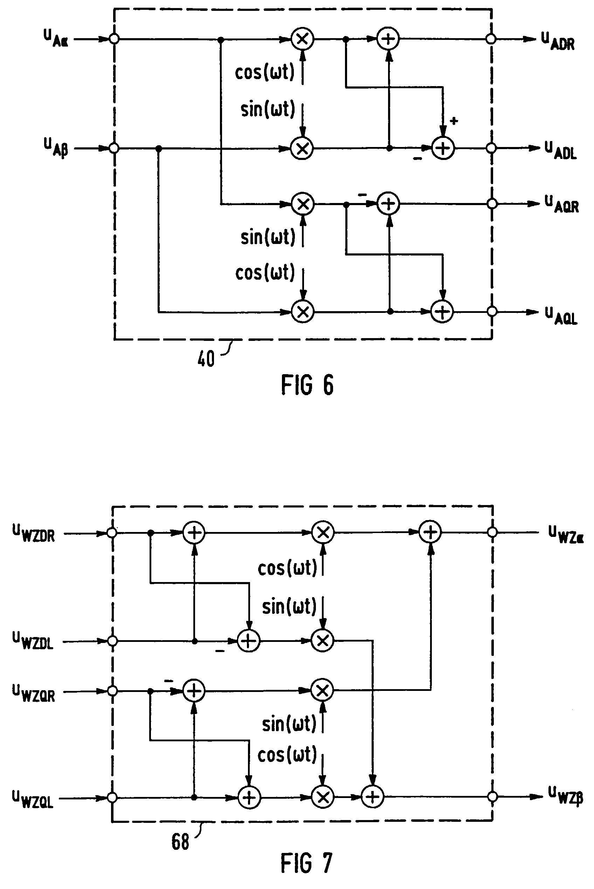

Mit Hilfe der weiteren Transformationseinrichtungen 40 und 42 erhält man die kartesischen D-, Q-Komponenten $u_{ADR}, u_{ADL}, u_{AQR}, u_{AQL}$ des Ausgangsspannungs-Raumzeigers und die kartesischen D-, Q-Komponenten $u_{WDR}, u_{WDL}, u_{WQR}, u_{WQL}$ des Führungsgrößen-Raumzeigers jeweils für das Rechtsdrehfeld und das Linksdrehfeld. Die Figur 6 zeigt eine Ausführungsform der weiteren Transformationseinrichtung 40 und 42. Mittels dieser Transformationseinrichtungen 40 und 42 erhält man jeweils zwei Komponenten eines Raumzeigers für das Rechts- und Linksdrehfeld, so daß selbst bei Schieflast Spannungsabfälle des Linksdrehfeldes ausgeregelt werden können. Durch die vier Gleichgrößen $u_{ADR}, u_{ADL}, u_{AQR}, u_{AQL}$ der Ausgangsspannung $u_A$ und die vier Gleichgrößen $u_{WDR}, u_{WDL}, u_{WQR}, u_{WQL}$ der Führungsgröße $u_W$ ist der Führungsregelkreis für jede Komponente identisch aufgebaut. Jeder Führungsregelkreis enthält einen Vergleicher 44 bzw. 46 bzw. 48 bzw. 50, einen Führungsregler 52 bzw. 54 bzw. 56 bzw. 58 und eine weitere Additionsstelle 60 bzw. 62 bzw. 64 bzw. 66. Als Führungsregler 52 bis 58 ist jeweils ein I-Regler vorgesehen, so daß eine ermittelte Regelabweichung zu Null geregelt werden kann. Wird eine vorbestimmte Regelabweichung zugelassen, so wird jeweils als Führungsregler 52 bis 58 ein $PT_1$-Regler vorgesehen. In Abhängigkeit der ermittelten Regelabweichung werden mittels der Führungsregler 52 bis 58 Zusatz-Soll-Gleichgrößen $u_{ZDR}, u_{ZQR}, u_{ZQL}$ erzeugt, die komponentenweise den Führungs-Gleichgrößen $u_{WDR}, u_{WDL}, u_{WQR}, u_{WQL}$ überlagert werden. Diese Summen-Soll-Gleichgrößen $u_{WZDR}, u_{WZDL}, u_{WZQR}, u_{WZQL}$ werden wieder in rotierende Vektoren in einem ruhenden Koordinatensystem mittels der weiteren Rücktransformationseinrichtung 68 zurücktransformiert. Die Figur 7 zeigt eine Ausführungsform dieser weiteren Rücktransformationseinrichtung 68.

Wie bereits erwähnt, ist in einem Diagramm der Figur 4 über der Frequenz der Verlauf des Führungsfrequenzganges des Wechselrichters 2 mit nachgeschaltetem Ausgangskreis 4 für den gesteuerten Betrieb (b) und den geregelten Betrieb (b') dargestellt. Ein Vergleich dieser beiden Verläufe zeigt, daß die Ausgangsspannung $u_A$ des Ausgangskreises 4 bis zur Grenzfrequenz der Führungsgröße $u_W$ folgt.

Somit besteht die Möglichkeit, mit der Vorrichtung 6 zur Durchführung des erfindungsgemäßen Verfahrens einerseits einen gewünschten Ausgangsimpedanzwert des Ausgangskreises 4 konstant über den gesamten Frequenzbereich vorzugeben und andererseits das Führungsverhalten einzustellen. Somit erhält man unabhängig von der Last ein konstantes Ausgangsspannungssystem mit einer gewünschten Genauigkeit.

**Patentansprüche**

1. Verfahren zur Vorgabe einer vorbestimmten Ausgangsimpedanz eines Ausgangskreises (4) eines Wechselrichters (2), wobei der Ausgangskreis (4) ein Sinusfilter (14), einen Transformator (16) und einen Ausgangskondensator (18) aufweist, wobei der Transformator (16) primärseitig in Dreieck und sekundärseitig in Stern geschaltet ist, mit folgenden Verfahrensschritten:

   a) Transformation von drei gemessenen, um 120° versetzten Ausgangsspannungen ($u_{A1}, u_{A2}, u_{A3}$) des Ausgangskreises (4) in zwei linear unabhängige, um 90° versetzte Sinusfunktionen ($u_{A\alpha}, u_{A\beta}$),
   b) Transformation von drei gemessenen, um 120° versetzten Ausgangsströmen ($i_{f1}, i_{f2}, i_{f3}$) des Wechselrichters (2) in zwei linear unabhängige, um 90° versetzte Sinusschwingungen ($i_{f\alpha}, i_{f\beta}$),
   c) Transformation von drei um 120° versetzten Sollspannungen ($u_{W1}, u_{W2}, u_{W3}$) in zwei um 90° versetzte Sinusfunktionen ($u_{W\alpha}, u_{W\beta}$),
   d) Generierung von zwei unabhängigen Korrekturspannungen ($u_{K\alpha}, u_{K\beta}$) in Abhängigkeit der transformierten Ausgangsspannungen ($u_{A\alpha}, u_{A\beta}$) und Ausgangsströmen ($i_{f\alpha}, i_{f\beta}$) mittels zweier Eingrößenregler (28,30),
   e) Erzeugung von zwei um 90° versetzten Stellgrößen ($y_\alpha, y_\beta$) durch komponentenweise Addition der transformierten Sollspannungen ($u_{W\alpha}, u_{W\beta}$) und der generierten Korrekturspannungen ($u_{K\alpha}, u_{K\beta}$) und
   f) Transformation der gebildeten Stellgrößen ($y_\alpha, y_\beta$) in drei um 120° versetzte Stellgrößen ($y_1, y_2, y_3$), die jeweils einem Stelleingang des Wechselrichters (2) zugeführt werden.

2. Verfahren nach Anspruch 1, wobei folgende Verfahrensschritte hinzugefügt werden:

   g) Transformation der beiden um 90° versetzten Soll-Sinusfunktionen ($u_{W\alpha}, u_{W\beta}$) jeweils in vier Gleichgrößen ($u_{WDR}, u_{WDL}, u_{WQR}, u_{WQL}$),
   h) Transformation der beiden um 90° versetzten Ausgangs-Sinusfunktionen ($u_{A\alpha}, u_{A\beta}$) jeweils in vier Gleichgrößen ($u_{ADR}, u_{AQR}, u_{ADL}, u_{AQL}$),
   i) Ermittlung von vier Regelabweichungen durch komponentenweisen Vergleich der erzeugten Ausgangs-Gleichgrößen ($u_{ADR}$,$u_{AQR}$,$u_{ADL}$,$u_{AQL}$) mit den erzeugten Soll-Gleichgrößen ($u_{WDR}$,$u_{WQR}$,$u_{WDL}$,$u_{WQL}$),

j) Erzeugung von Zusatz-Soll-Gleichgrößen ($u_{ZDR}$,$u_{ZQR}$,$u_{ZDL}$,$u_{ZQL}$) aus den ermittelten Regelabweichungen,

k) komponentenweise Addition dieser ermittelten Zusatz-Soll-Gleichgrößen ($u_{ZDR}$,$u_{ZQR}$,$u_{ZDL}$,$u_{ZQL}$) zu den Soll-Gleichgrößen ($u_{WDR}$,$u_{WQR}$,$u_{WDL}$,$u_{WQL}$) und

l) Transformation dieser erzeugten Summen-Soll-Gleichgrößen ($u_{WZDR}$,$u_{WZQR}$,$u_{WZDL}$,$u_{WZQL}$) in zwei um 90° versetzte Summen-Soll-Sinusfunktionen ($u_{WZ\alpha}$,$u_{WZ\beta}$), die komponentenweise zu den generierten Korrekturspannungen ($u_{K\alpha}$,$u_{K\beta}$) addiert werden.

3. Vorrichtung (6) zur Durchführung des Verfahrens zur Vorgabe einer vorbestimmten Ausgangsimpedanz eines Ausgangskreises (4) eines Wechselrichters (2) nach Anspruch 1, wobei der Ausgangskreis (4) einen Sinusfilter (14), einen Transformator (16) und einen Ausgangskondensator (18) aufweist, wobei der Transformator (16) primärseitig in Dreieck und sekundärseitig in Stern geschaltet ist, mit drei Transformationseinrichtungen (22,24,26) zur Transformation eines dreiphasigen Ausgangsspannungssystems ($u_{A1}$,$u_{A2}$,$u_{A3}$) des Ausgangskreises (4), eines dreiphasigen Ausgangsstromsystems ($i_{f1}$,$i_{f2}$,$i_{f3}$) des Wechselrichters (2) und eines dreiphasigen Sollspannungssystems ($u_{W1}$,$u_{W2}$,$u_{W3}$) in jeweils zwei um 90° versetzte Sinusfunktionen ($u_{A\alpha}$,$u_{A\beta}$;$i_{f\alpha}$,$i_{f\beta}$;$u_{W\alpha}$,$u_{W\beta}$), mit zwei Eingrößenreglern (28,30), die eingangsseitig mit den Ausgängen der Transformationseinrichtungen (24,26) für das Ausgangsspannungs- und Ausgangsstromsystem ($u_{A1}$,$u_{A2}$,$u_{A3}$;$i_{f1}$,$i_{f2}$,$i_{f3}$) verknüpft sind, mit zwei Additionsstellen (32,34), deren erste Eingänge mit den Ausgängen der Transformationseinrichtung (22) für das Sollspannungssystem ($u_{W1}$,$u_{W2}$,$u_{W3}$) und deren zweite Eingänge mit jeweils einem Ausgang der beiden Eingrößenregler (28,30) verknüpft sind und mit einer Rücktransformationseinrichtung (36), die an den Ausgängen der beiden Additionsstellen (32,34) anstehenden Stellgrößen ($y_{\alpha}$,$y_{\beta}$) in ein dreiphasiges Stellgrößensystem ($y_1$, $y_2$,$y_3$) rücktransformiert.

4. Vorrichtung (6) nach Anspruch 3, wobei den Transformationseinrichtungen (22,24) für das Ausgangs- und Sollspannungssystem ($u_{A1}$,$u_{A2}$,$u_{A3}$;$u_{W1}$,$u_{W2}$,$u_{W3}$) jeweils eine weitere Transformationseinrichtung zur Transformation der 90° versetzten Sinusfunktionen ($u_{A\alpha}$,$u_{A\beta}$;$u_{W\alpha}$,$u_{W\beta}$) in Gleichgrößen ($u_{ADR}$,$u_{AQR}$,$u_{ADL}$, $u_{AQL}$; $u_{WDR}$,$u_{WQR}$,$u_{WDL}$,$u_{WQL}$) nachgeschaltet sind, wobei jeder Ausgang der weiteren Transformationseinrichtung (42) für die Ausgangs-Sinusfunktionen ($u_{A\alpha}$,$u_{A\beta}$) mit einem invertierenden Eingang eines Vergleichers (44,46,48,50) verbunden ist, wobei jeder Ausgang der weiteren Transformationseinrichtung (40) für die Soll-Sinusfunktionen ($u_{W\alpha}$,$u_{W\beta}$) mit den nichtinvertierenden Eingängen dieser Vergleicher (44,46,48,50) und mit einem ersten Eingang einer weiteren Additionsstelle (60,62,64,66) verbunden ist, wobei jeder Ausgang dieser Vergleicher (44,46, 48,50) mittels eines Reglers (52,54,56,58) mit einem zweiten Eingang dieser weiteren Additionsstellen (60,62,64,66) verknüpft ist, deren Ausgänge mit einer weiteren Rücktransformationseinrichtung (68) zur Rücktransformation der Summen-Soll-Gleichgrößen ($u_{WZDR}$,$u_{WZQR}$,$u_{WZDL}$,$u_{WZQL}$) in zwei um 90° versetzte Summen-Soll-Sinusfunktionen ($u_{WZ\alpha}$,$u_{WZ\beta}$) verbunden ist und wobei die beiden Ausgänge dieser Rücktransformationseinrichtung (68) mit den beiden Additionsstellen (32,34) verknüpft sind.

5. Vorrichtung (6) nach Anspruch 3, wobei jeweils als Eingrößenregler (28,30) ein Zustandsregler vorgesehen ist.

6. Vorrichtung (6) nach Anspruch 4, wobei jeweils als Regler (52,54,56,58) ein I-Regler vorgesehen ist.

7. Vorrichtung (6) nach Anspruch 4, wobei jeweils als Regler (52,54,56,58) ein $PT_1$-Regler vorgesehen ist.

FIG 1

FIG 2

FIG 8

FIG 3

FIG 4

FIG 5

EP 0 797 291 A2

FIG 6

FIG 7